# EUROPEAN PATENT SPECIFICATION

(11) **EP 4 301 984 B1**
(45) Date of publication and mention of the grant of the patent: **28.01.2026**
(21) Application number: 21711483.4
(22) Date of filing: 03.03.2021
(51) Int. Cl.: F04C 2/10, F04C 14/28, F04C 2/18

(54) **METHOD OF HANDLING GEAR PUMP, CONTROL SYSTEM, COATING APPARATUS AND ROBOT SYSTEM**
VERFAHREN ZUR HANDHABUNG EINER ZAHNRADPUMPE, STEUERUNGSSYSTEM, BESCHICHTUNGSVORRICHTUNG UND ROBOTERSYSTEM
PROCÉDÉ DE MANIPULATION D'UNE POMPE À ENGRENAGES, SYSTÈME DE COMMANDE, APPAREIL DE REVÊTEMENT ET SYSTÈME ROBOTISÉ

(43) Date of publication of application: 10.01.2024
(73) Proprietor: ABB SCHWEIZ AG, 5400 Baden (CH)
(72) Inventor: KROGEDAL, Arnulf, 4322 Sandnes (NO); KROGEDAL, Geir, Sandnes 4322 (NO); TRYDAL, Jakob, 4355 Kvernaland (NO)
(74) Representative: Kransell & Wennborg KB
(86) International application number: PCT/EP2021/055281
(87) International publication number: WO 2022/184246

(56) References cited:
- EP-A2- 2 209 976
- GB-A- 2 492 230
- US-A1- 2020 064 222

## Description

### Technical Field

The present disclosure generally relates to a gear pump. In particular, a method of handling a gear pump, a control system for handling a gear pump, an apparatus for applying a coating medium to an object, and a robot system comprising an industrial robot and a coating apparatus, are provided.

### Background

In robotized painting processes, a gear pump is often used to control the dosing of paint to an atomizer. The paint result is highly dependent on an accurate control of the paint flow rate. For automotive robotic painting, the paint dosing accuracy by the gear pump directly affects the painting result. Over time, the gear pump is worn and the flow rate through the gear pump at a given rotational speed therefore decreases due to an increased internal leakage of the gear pump. When the wear exceeds a certain limit, the gear pump must be replaced or serviced. Some gear pumps also become mechanically damaged or are improperly mounted, resulting in an inaccurate dosing of liquid.

In some applications, the internal leakage of the gear pump is checked by performing a cup test where the actual accumulated flow is checked relative to a reference value. Such cup test may comprise requesting a given paint flow from the gear pump, for example 500 ml/min. The cup test is run for a given time, for example 30 seconds. During the cup test, the output paint from the gear pump is collected in a cup and the volume of the paint in the cup is measured. Based on the requested flow and the duration of the test, a volume corresponding to the reference value should be measured in the cup, in this example 250 ml. The deviation between the measured volume and the reference volume can then be taken as a measure of the wear of the gear pump.

The cup test requires a lot of manual effort and is usually performed at long time intervals. In between the cup tests, there is no information about the actual health status of the gear pump. This makes it difficult to plan maintenance of the gear pump.

EP 1522731 A2 discloses a method of monitoring the health of a positive displacement hydraulic pump. The method comprises the steps of establishing a flow path having a known flow number between a high pressure outlet line of the pump and a low pressure line of the system; progressively changing the speed of operation of the pump; and, noting the speed of operation of the pump at a parameter responsive to the downstream pressure of the pump changes in response to said change in rotational speed of the pump.

US 2020064222 A1 discloses a method of fault diagnosis of an aqueous urea solution feed system. The feed system comprises a gear pump having drive gears and driven gears, a tank, a rotational speed sensor, a pressure sensor, an injector, a low pressure side feed pipe between the tank and the gear pump, and a high pressure side feed pipe between the gear pump and the injector. The method comprises judging abnormalities of the feed system based on a rotational speed difference between a rotational speed of the gear pump during injection by the injector and a rotational speed of the gear pump before injection.

### Summary

One object of the present disclosure is to provide a method of handling a gear pump, which method can efficiently determine at least one operational condition of the gear pump.

A further object of the present disclosure is to provide a method of handling a gear pump, which method can automatically determine at least one operational condition of the gear pump.

A still further object of the present disclosure is to provide a method of handling a gear pump, which method can reliably determine at least one operational condition of the gear pump.

A still further object of the present disclosure is to provide a method of handling a gear pump, which method can determine at least one operational condition of the gear pump in a cost-efficient manner.

A still further object of the present disclosure is to provide a method of handling a gear pump, which method enables a performance of the gear pump to be improved.

A still further object of the present disclosure is to provide a method of handling a gear pump, which method enables a lifetime of the gear pump to be better utilized.

A still further object of the present disclosure is to provide a method of handling a gear pump, which method solves several or all of the foregoing objects in combination.

A still further object of the present disclosure is to provide a control system for handling a gear pump, which control system solves one, several or all of the foregoing objects.

A still further object of the present disclosure is to provide an apparatus for applying a coating medium to an object, which apparatus solves one, several or all of the foregoing objects.

A still further object of the present disclosure is to provide a robot system comprising an industrial robot and an apparatus, which robot system solves one, several or all of the foregoing objects.

According to one aspect, there is provided a method of handling a gear pump, the gear pump comprising a driving gear wheel having a plurality of driving teeth and a driven gear wheel having a plurality of driven teeth meshing with the driving teeth, the method comprising controlling the gear pump in a testing mode comprising commanding driving of the gear pump to pump liquid towards a downstream device and commanding an increase of rotational speed of the gear pump; monitoring rotation values indicative of the rotational speeds during the testing mode; monitoring pressure values by means of at least a downstream pressure sensor during the testing mode, the downstream pressure sensor being arranged to measure a downstream pressure of the liquid between the gear pump and the downstream device; and determining at least one operational condition of the gear pump based on the pressure values and the rotation values.

The method provides an automatic monitoring of the at least one operational condition of the gear pump. The method can be performed with minimal effort. The method can therefore be performed at short intervals to make sure that updated information regarding the health status of the gear pump is always available. A deterioration of the health status of the gear pump can thereby be detected at an early stage. The at least one operational condition as determined by the method can be used to determine and/or forecast when the gear pump will need maintenance.

The method may comprise commanding a continuous increase or an incremental increase of the rotational speed of the gear pump. In any case, the rotational speed of the gear pump may be relatively slowly increased from a relatively low rotational speed. The method may be carried out with an apparatus of any type according to the present disclosure.

The at least one operational condition as determined by the method can be used for various purposes. For example, by determining the at least one operational condition at regular intervals, it is possible to accurately keep track of the health status of the gear pump. Trends in the at least one operational condition can be monitored to accurately forecast when repair and/or maintenance of the gear pump will be needed. Such repair and/or maintenance can therefore be planned in good time with minimal impact on a process involving the gear pump. Unnecessary downtime of the gear pump can therefore be avoided.

The method may comprise determining the at least one operational condition based on the rotation values and a characteristic of the pressure values from the testing mode. In this case, the pressure values may be downstream pressure values as read by the downstream pressure sensor during the testing mode. By analyzing the downstream pressure values from the testing mode, various operational conditions of the gear pump can be detected and classified. Examples of such operational conditions include damages on an individual tooth of the gear pump or a misalignment between the driving gear wheel and the driven gear wheel.

The gear pump may be driven by a motor via a shaft. The method also enables determination of whether the shaft is actually connected to the gear pump and to the motor. Thus, when driving of the gear pump is commanded during the testing mode and the pressure values do not increase as expected, or do not increase at all, the at least one operational condition of the gear pump may be determined as faulty due to an incorrect or absent connection between the motor and the gear pump. In some prior art apparatuses, the shaft is detachably connected to the motor and/or to the gear pump, e.g. for maintenance purposes. An operator may however forget to connect the motor to the gear pump via the shaft. A painting robot may then run a painting program without actually painting an object. Some such prior art apparatuses use dedicated sensors for verifying that the motor is correctly connected to the gear pump. The method enables such sensors to be eliminated.

The method may further comprise monitoring pressure difference values indicative of pressure differences over the gear pump, the pressure difference values being determined based on the pressure values; and determining the at least one operational condition of the gear pump based on the rotation value when the pressure difference value reaches a target pressure difference value. The target pressure difference value may be a predefined constant value. The target pressure difference value may be set to at least 3 bar, such as 5 bar.

When the pressure difference value reaches the target pressure difference value, the rotation of the gear pump may be stopped. As the wear of the gear pump increases over time, the rotation value when the pressure difference value reaches the target pressure difference value will increase. The rotation value when the pressure difference value reaches the target pressure difference value, as determined during the testing mode, will therefore provide an indication of the health status of the gear pump.

Since the method uses a downstream pressure sensor providing pressure values during the testing mode, the method does not need a downstream valve that must be triggered to open at a specific pressure. A more cost efficient design of an apparatus comprising the gear pump is thereby enabled.

The pressure difference may be determined based on downstream pressure values measured by the downstream pressure sensor and upstream pressure values measured by an upstream pressure sensor. The upstream pressure sensor may be arranged to measure an upstream pressure of the liquid to the gear pump. The upstream pressure sensor is however optional. The downstream pressure and the upstream pressure may also be referred to as an output pressure and an input pressure, respectively.

The at least one operational condition may comprise a leakage of the gear pump, a misalignment between the driving gear wheel and the driven gear wheel, and/or a defect of one of the driving teeth and the driven teeth. The leakage may be substantially proportional to, or proportional to, the rotation value when the pressure difference value reaches the target pressure difference value during the testing mode.

The method may further comprise controlling the gear pump in an operational mode comprising commanding driving of the gear pump to pump liquid through the downstream device while controlling the gear pump to automatically compensate for the at least one operational condition. For example, in case the at least one operational condition is indicative of a wear of the gear pump, the information regarding this operational condition can be used to compensate for the wear by increasing the rotational speed of the gear pump. In this way, the lifetime of the gear pump is better utilized and the performance of the gear pump is improved.

The method may further comprise automatically issuing a warning based on the at least one operational condition. The warning may be a visual warning and/or an audible warning to a user. The user can thereby initiate a countermeasure, such as scheduling a maintenance, a long time before the deterioration of the gear pump unavoidably has a negative impact on a process.

The downstream device may be a downstream valve. In this case, the downstream valve may be closed during the testing mode. In this variant, the rotational speed of the gear pump may be more slowly increased in comparison with when the downstream device is a restriction. The rotational speed is increased slowly from a relatively low rotational speed during the testing mode while the pressure difference over the gear pump is monitored.

The time period during which the gear pump can be driven to pump liquid against the closed downstream valve depends inter alia on the leakage of the gear pump and the rotational speed of the gear pump. The gear pump may be arranged such that when the downstream valve is closed, the leakage of the gear pump constitutes the only flow path of the liquid.

The method according to the present disclosure can however also be carried out with a downstream device in the form of a restriction rather than a closed downstream valve. This may for example be advantageous in applications where a closable downstream valve is not available. In this case, there will be two flow paths: the internal leakage of the gear pump and the flow through the restriction.

In any case, the downstream device may be static during the testing mode. Thus, a resistance to the output flow from the gear pump by the downstream device may be constant during the testing mode. In case the downstream device is a downstream valve, a valve position of the downstream valve may remain constant during the testing mode.

According to a further aspect, there is provided a control system for handling a gear pump, the gear pump comprising a driving gear wheel having a plurality of driving teeth and a driven gear wheel having a plurality of driven teeth meshing with the driving teeth, the control system comprising at least one data processing device and at least one memory having a computer program stored thereon, the computer program comprising program code which, when executed by the at least one data processing device, causes the at least one data processing device to perform the steps of controlling the gear pump in a testing mode, the testing mode comprising commanding driving of the gear pump to pump liquid towards a downstream device and commanding an increase of rotational speed of the gear pump; providing rotation values indicative of the rotational speeds during the testing mode; providing pressure values monitored by means of at least a downstream pressure sensor during the testing mode, the downstream pressure sensor being arranged to measure a downstream pressure of the liquid between the gear pump and the downstream device; and determining at least one operational condition of the gear pump based on the pressure values and the rotation values.

The computer program may comprise program code which, when executed by the at least one data processing device, causes the at least one data processing device to perform the steps of providing pressure difference values indicative of pressure differences over the gear pump, the pressure difference values being determined based on the pressure values; and determining the at least one operational condition of the gear pump based on the rotation value when the pressure difference value reaches a target pressure difference value.

The at least one operational condition may comprise a leakage of the gear pump, a misalignment between the driving gear wheel and the driven gear wheel, and/or a defect of one of the driving teeth and the driven teeth.

The computer program may comprise program code which, when executed by the at least one data processing device, causes the at least one data processing device to perform the step of controlling the gear pump in an operational mode, the operational mode comprising commanding driving of the gear pump to pump liquid through the downstream device while controlling the gear pump to automatically compensate for the at least one operational condition.

The computer program may comprise program code which, when executed by the at least one data processing device, causes the at least one data processing device to perform the step of automatically commanding issuance of a warning based on the at least one operational condition.

According to a further aspect, there is provided an apparatus for applying a coating medium to an object, the apparatus comprising the gear pump, the downstream device, the downstream pressure sensor and the control system according to the present disclosure. The apparatus may further comprise the upstream pressure sensor. The apparatus may further comprise an applicator, such as an atomizer, for atomizing coating medium, such as paint. The apparatus for applying a coating medium to an object may alternatively be referred to as a coating apparatus. In this aspect, the liquid pumped by the gear pump in the testing mode may be a cleaning liquid.

Since many coating apparatuses already comprise a gear pump, a downstream sensor and a downstream pressure sensor for measuring a downstream pressure between the gear pump and the downstream device, the method can relatively easily be implemented in existing coating apparatuses, e.g. by only a software change. This contributes to the cost-efficiency of the apparatus.

The downstream device may be a downstream valve. In this case, the computer program may comprise program code which, when executed by the at least one data processing device, causes the at least one data processing device to perform the step of commanding closing of the downstream valve during the testing mode. Since the at least one operational condition can be determined with a closed downstream valve, the method can be carried out while the applicator is positioned next to the object to be coated. Thus, the method enables elimination of coating medium waste. Moreover, the apparatus can be positioned arbitrarily when carrying out the method without risking contamination of the environment. This further reduces downtime of a process involving the apparatus, such as a painting process.

The apparatus may further comprise a coating medium line for supplying the coating medium. In this case, the gear pump, the downstream device and the downstream pressure sensor may be arranged on the coating medium line. Also the upstream pressure sensor may be arranged on the coating medium line.

The apparatus may further comprise a valve arrangement. The valve arrangement may be configured to selectively bring each of a plurality of pressurized fluid sources in fluid communication with the gear pump. Examples of such pressurized fluid sources are a coating medium sources, each containing a unique type of pressurized coating medium, and a cleaning liquid source containing pressurized cleaning liquid, such as solvent.

The coating medium line may constitute the only downstream volume between the gear pump and the downstream device. Alternatively, or in addition, the coating medium line may constitute the only upstream volume between the valve arrangement and the gear pump.

The apparatus may further comprise a motor and a shaft. In this case, the gear pump may be arranged to be driven by the motor via the shaft.

According to a further aspect, there is provided a robot system comprising an industrial robot and an apparatus according to the present disclosure. The industrial robot may comprise a manipulator programmable in three or more axes, such as six or seven axes. The apparatus may be carried by the manipulator.

### Brief Description of the Drawings

Further details, advantages and aspects of the present disclosure will become apparent from the following description taken in conjunction with the drawings, wherein:
- Fig. 1:: schematically represents a side view of a robot system comprising an industrial robot and a coating apparatus having a gear pump;
- Fig. 2:: schematically represents a block diagram of the coating apparatus;
- Fig. 3:: schematically represents a diagram of a downstream pressure of the gear pump when the gear pump functions correctly;
- Fig. 4:: schematically represents a diagram of a downstream pressure of the gear pump when a driving gear wheel and a driven gear wheel are misaligned; and
- Fig. 5:: schematically represents a diagram of the downstream pressure of the gear pump when a tooth of a gear wheel is damaged.

### Detailed Description

In the following, a method of handling a gear pump, a control system for handling a gear pump, an apparatus for applying a coating medium to an object, and a robot system comprising an industrial robot and a coating apparatus, will be described. The same or similar reference numerals will be used to denote the same or similar structural features.

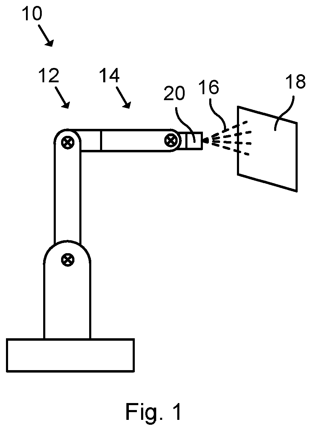

Fig. 1 schematically represents a side view of a robot system 10. The robot system 10 comprises an industrial robot 12 and a coating apparatus 14. The industrial robot 12 comprises a manipulator movable in at least three axes, such as in six or seven axes. The coating apparatus 14 is carried by the manipulator. The coating apparatus 14 is configured to apply a paint 16 to an object 18, as shown in Fig. 1. The paint 16 is one example of a coating medium according to the present disclosure. The object 18 may for example be a body part of a vehicle.

Fig. 1 further shows that the coating apparatus 14 comprises an atomizer 20. The atomizer 20 is one example of an applicator as described herein. The atomizer 20 is here positioned at a distal end of the manipulator.

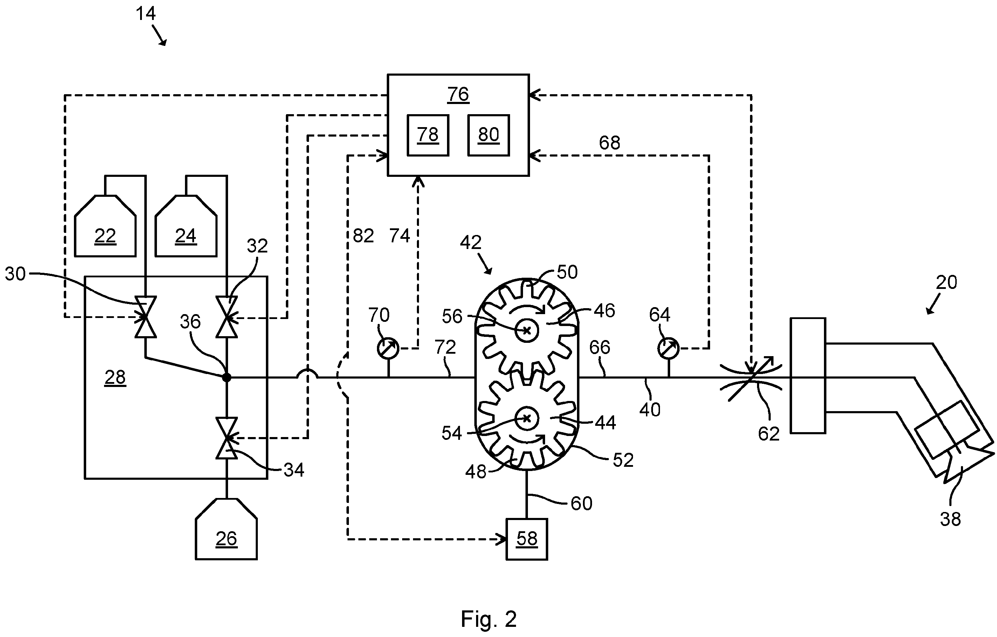

Fig. 2 schematically represents a block diagram of the coating apparatus 14. The coating apparatus 14 of this example further comprises a first paint source 22 containing pressurized liquid paint 16 of a first type (e.g. of a first color), a second paint source 24 containing pressurized liquid paint 16 of a second type (e.g. of a second color) and a cleaning liquid source 26 containing pressurized cleaning liquid (e.g. solvent). Although only two paint sources 22 and 24 are illustrated, the coating apparatus 14 may comprise at least ten different paint sources, such as 20 to 30 different paint sources (e.g. paint sources).

The coating apparatus 14 further comprises a valve arrangement 28. The valve arrangement 28 of this example further comprises a first paint valve 30 associated with the first paint source 22, a second paint valve 32 associated with the second paint source 24, and a cleaning liquid valve 34 associated with the cleaning liquid source 26. Each of the first paint valve 30, the second paint valve 32 and the cleaning liquid valve 34 is here exemplified as a 2/2 valve. The valve arrangement 28 here functions as a color changer.

The valve arrangement 28 of this example further comprises a junction 36. The first paint valve 30, the second paint valve 32 and the cleaning liquid valve 34 are in direct fluid communication with the junction 36.

The atomizer 20 comprises a rotatable deflecting element, here exemplified as a bell cup 38. The bell cup 38 is configured to atomize the paint 16.

The coating apparatus 14 further comprises a paint line 40. The paint line 40 is one example of a coating medium line according to the present disclosure. The paint line 40 here extends from the junction 36 to the bell cup 38. The valve arrangement 28 is thus configured to independently bring each of the first paint source 22, the second paint source 24 and the cleaning liquid source 26 in fluid communication with the atomizer 20 through the paint line 40.

The coating apparatus 14 further comprises a gear pump 42. The gear pump 42 is positioned on the paint line 40. In this example, the gear pump 42 is positioned between the valve arrangement 28 and the atomizer 20.

The gear pump 42 comprises a driving gear wheel 44 and a driven gear wheel 46. The driving gear wheel 44 comprises a plurality of driving teeth 48. The driven gear wheel 46 comprises a plurality of driven teeth 50. The driving teeth 48 and the driven teeth 50 are in meshing engagement.

The gear pump 42 further comprises a housing 52. The driving gear wheel 44 and the driven gear wheel 46 are housed inside the housing 52. The upstream connection and the downstream connection of the paint line 40 are the only openings to the housing 52.

The driving gear wheel 44 is rotatable about a driving axis 54. The driven gear wheel 46 is rotatable about a driven axis 56. The driving axis 54 and the driven axis 56 are parallel.

The coating apparatus 14 further comprises a motor 58 for driving the gear pump 42. The coating apparatus 14 further comprises a shaft 60 connected between the motor 58 and the driving gear wheel 44.

The coating apparatus 14 further comprises a downstream valve 62. The downstream valve 62 is one example of a downstream device according to the present disclosure. The downstream valve 62 is positioned on the paint line 40 downstream of the gear pump 42. In this example, the downstream valve 62 is positioned on the paint line 40 between the gear pump 42 and the atomizer 20. Although only one downstream valve 62 is shown in Fig. 2, the coating apparatus 14 may comprise a plurality of such downstream valves 62 between the gear pump 42 and the atomizer 20, depending on the process.

The coating apparatus 14 further comprises a downstream pressure sensor 64. The downstream pressure sensor 64 is positioned on the paint line 40 between the gear pump 42 and the downstream valve 62. The downstream pressure sensor 64 is configured to read downstream pressures of the liquid in the paint line 40 at an output side 66 of the gear pump 42. The downstream pressure sensor 64 outputs downstream pressure values 68 indicative of the pressures at the output side 66.

The coating apparatus 14 of this example further comprises an upstream pressure sensor 70. The upstream pressure sensor 70 is optional. The upstream pressure sensor 70 is positioned on the paint line 40 upstream of the gear pump 42. In this example the upstream pressure sensor 70 is positioned between the valve arrangement 28 and the gear pump 42. The upstream pressure sensor 70 is configured to read upstream pressures of the liquid in the paint line 40 at an input side 72 of the gear pump 42. The upstream pressure sensor 70 outputs upstream pressure values 74 indicative of the pressures at the input side 72.

The coating apparatus 14 further comprises a control system 76. The control system 76 comprises a data processing device 78 and a memory 80 having a computer program stored thereon. The computer program comprises program code which, when executed by the data processing device 78 causes the data processing device 78 to perform, and/or command performance of, various steps as described herein. The control system 76 is in signal communication with the valve arrangement 28. In this example, the control system 76 is in signal communication with, to command opening and closing of, each of the first paint valve 30, the second paint valve 32 and the cleaning liquid valve 34.

The control system 76 is further in signal communication with the downstream valve 62 to command an opening degree thereof. The control system 76 is further in signal communication with the motor 58. The control system 76 controls the rotational speed of the motor 58. The motor 58 sends rotation values 82 to the control system 76. The rotation values 82 are indicative of the rotational speeds of the gear pump 42. Rotation values 82 indicative of the rotational speeds of the gear pump 42 may however be obtained and communicated to the control system 76 in a wide range of ways.

The downstream pressure sensor 64 and the upstream pressure sensor 70 are in signal communication with the control system 76 to send the downstream pressure values 68 and the upstream pressure values 74, respectively, to the control system 76.

In a painting process with the coating apparatus 14, the gear pump 42 is used to control dosing of paint to the atomizer 20. One common malfunction of the gear pump 42 is that the driving teeth 48 and/or the driven teeth 50 are worn down. This results in leakage from the high pressure downstream side to the low pressure upstream side of the gear pump 42. Leakage can also occur due to wear of the housing 52. The leakage of the gear pump 42 is manifested in that the flow rate of paint out from the atomizer 20 is reduced for a given rotational speed of the gear pump 42. The painting result is therefore deteriorated.

A further type of malfunction of the gear pump 42 is when the driving gear wheel 44 and the driven gear wheel 46 are misaligned. Such misalignment may for example occur when the driving axis 54 and the driven axis 56 are not perfectly parallel, when a distance between the driving axis 54 and the driven axis 56 is not correct, and/or when the positioning of the driving axis 54 and the driven axis 56 are not accurate with respect to the housing 52.

A further type of malfunction is a broken tooth or other structural defect of the gear wheels 44 and 46. If one or more of the driving teeth 48 and the driven teeth 50 are broken, the paint will not be dosed as efficiently at this point of the gear pump 42.

In prior art solutions, these types of malfunctions are detected manually. For example, by means of a cup test, it can be detected if the gear pump 42 gives higher or lower flow than expected. As a further example, the painting result on a test object (or on the object 18) can be visually inspected to see if there is a possible malfunction of the gear pump 42. Both these checks require a process line involving the robot system 10 to stop, wasting both time and paint. These measures also ultimately depend on the skill of an operator performing the checks, which can lead to different conclusions regarding the health status of the gear pump 42.

In the following, one example of a method of handling the gear pump 42 will be described. The method of this example utilizes the downstream valve 62, the downstream pressure sensor 64, the upstream pressure sensor 70 and the gear pump 42 itself to determine one or more operational conditions of the gear pump 42. The method comprises controlling the gear pump 42 in a testing mode in order to automatically determine an operational condition of the gear pump 42. The method is controlled by the control system 76.

The testing mode may for example be started each time when the paint line 40 has been cleaned, each day, each week or as desired by the user. The cleaning may comprise conducting cleaning liquid, such as solvent, through the coating apparatus 14. The cleaning liquid is then left in the paint line 40 and the downstream valve 62 is closed. Also the first paint valve 30, the second paint valve 32 and the cleaning liquid valve 34 are closed. Thus, a closed volume of cleaning liquid is provided between the valve arrangement 28 and the downstream valve 62. The testing mode can thus be performed without mechanically affecting any parts outside this closed volume. This is advantageous since the manipulator does not have to move the coating apparatus 14 away from a painting site in order to check the health status of the gear pump 42. Instead, the method can be carried out even when the coating apparatus 14 is positioned facing the object 18.

In the testing mode, the gear pump 42 pumps liquid towards the downstream valve 62. The rotational speed of the gear pump 42 is initially low and then slowly increased, for example continuously. The rotational speed may be a constant low speed before the rotational speed is increased. The downstream pressure values 68, the upstream pressure values 74 and the rotation values 82 are recorded by the control system 76 with a common timing during testing mode. The control system 76 also continuously determines pressure differences over the gear pump 42 by subtracting the upstream pressure values 74 from the downstream pressure values 68. The rotational values, the upstream pressure values 74, the downstream pressure values 68 and the pressure difference values may be referred to as testing mode data.

If the gear pump 42 is worn, the internal leakage of the gear pump 42 may be relatively high. The downstream pressure will then not build as high as for a new gear pump with low leakage. By means of the testing mode, automatic monitoring of internal leakage of the gear pump 42 can be carried out by running the gear pump 42 against the closed downstream valve 62 while monitoring the pressure difference over the gear pump 42. In case the upstream pressure sensor 70 is eliminated, the upstream pressure may be assumed to be constant for the purposes of the testing mode.

By closing the downstream valve 62 and then slowly increasing the rotational speed of the gear pump 42, the gear pump 42 is effectively pushing the liquid towards a dead end. The gear pump 42 is rotated slowly in order to not increase the downstream pressure above critical levels of the paint line 40 and the downstream valve 62.

As the rotational speed of the gear pump 42 is increased, the pressure difference value in most situations eventually reaches a predetermined target pressure difference value, such as 5 bar. The gear pump 42 is then driven a few additional revolutions to gather additional actionable testing mode data. The recording is now complete and the coating apparatus 14 is ready for a next painting process. The testing mode data can be processed at the same time as the next painting process is performed by the coating apparatus 14. In the method, the rotational speed of the gear pump 42 when the pressure difference reaches the target pressure difference value is taken as a measure of the leakage, and hence an operational condition, of the gear pump 42. When this rotational speed is high, the leakage is high and vice versa. This is due to that the pressure difference over the gear pump 42 can be assumed to be proportional to the leakage for a given rotational speed.

Since the downstream valve 62 is closed, the pressure difference will successively increase as the rotational speed of the gear pump 42 is increased. In case the pressure difference does not increase when the control system 76 commands an increase in rotational speed of the gear pump 42, it can be concluded that the connection between the motor 58 and the gear pump 42 is faulty. A warning may then be automatically issued to the user. A faulty connection between the motor 58 and the gear pump 42 is thus one example of an operational condition of the gear pump 42 that can be determined by the method without requiring a dedicated sensor for this purpose.

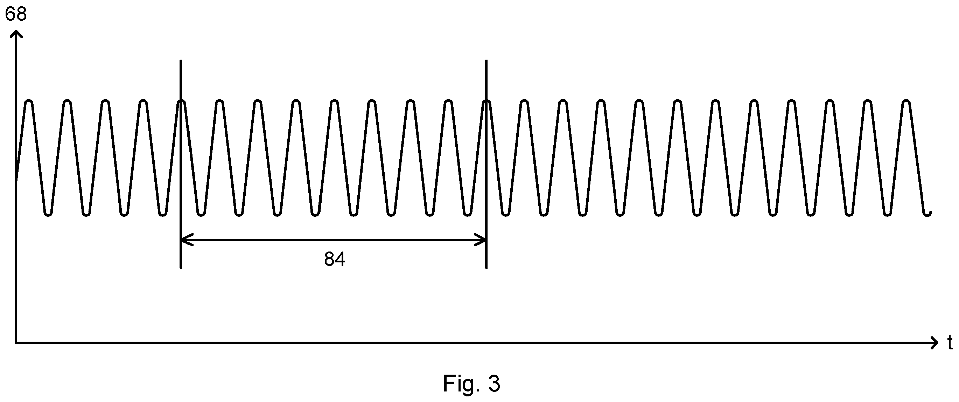

Fig. 3 schematically represents a diagram of the downstream pressure values 68 of the gear pump 42 as a function of time t during the testing mode when the gear pump 42 functions correctly. When the gear pump 42 rotates slowly during the testing mode, the readings from the downstream pressure sensor 64 will give a very distinct signature, down to the level of each tooth on the driving gear wheel 44 and the driven gear wheel 46. Every time a new dose of liquid is delivered from a space between the driving teeth 48 or a space between the driven teeth 50, the pressure will increase. The liquid will then leak past the driving gear wheel 44 and/or the driven gear wheel 46 in the upstream direction and the downstream pressure will drop. As shown in Fig. 3, each upper peak of the downstream pressure corresponds to a tooth of the gear pump 42. Thus, in case an amplitude of upper peaks corresponding to a single tooth is low, this tooth may be damaged. In Fig. 3, reference numeral 84 indicates one revolution of the gear pump 42. Based on the downstream pressure values 68 during the testing mode, the control system 76 detects peak-to-peak pressure values, the change in upper peak values, the change in lower peak values, and a sudden change between local minimums or maximums.

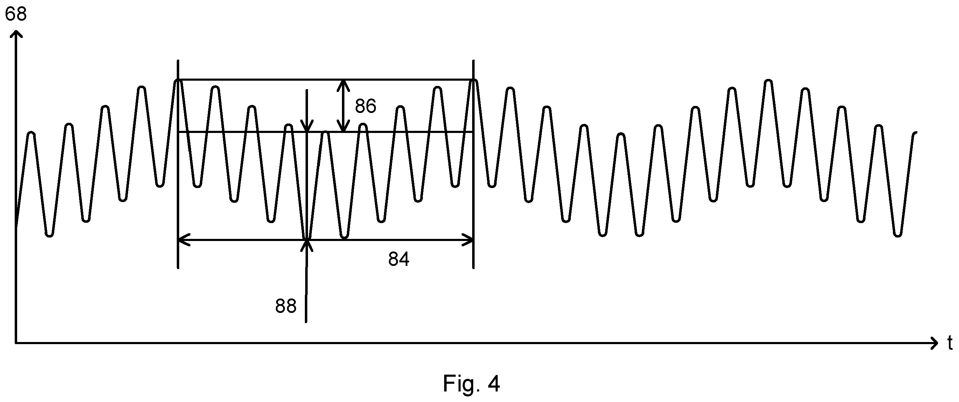

Fig. 4 schematically represents a diagram of the downstream pressure values 68 of the gear pump 42 as a function of time t when the driving gear wheel 44 and the driven gear wheel 46 are misaligned. The entire sine curve moves up and down, indicating misalignment of the driving gear wheel 44 and the driven gear wheel 46. Misalignment of the driving gear wheel 44 and the driven gear wheel 46 is thus a further operational condition of the gear pump 42 that can be detected by the method.

In Fig. 4, reference numeral 86 indicates a full revolution pressure difference of the downstream pressure values 68 within one revolution 84 and reference numeral 88 indicates a peak-to-peak pressure difference of the gear pump 42. The control system 76 automatically determines the full revolution pressure difference 86 and the peak-to-peak pressure difference 88 based on the downstream pressure values 68 from the testing mode.

The peak-to-peak pressure difference 88 combined with the rotation values 82 of the gear pump 42 form a basis of comparison between the gear pump 42 and a new gear pump. If the gear pump 42 cannot achieve a high peak-to-peak pressure difference 88 and a high maximum pressure at normal rotation speed, this can be compensated for, within a range, before the gear pump 42 needs to be replaced.

The periodic change in local minimum and maximum values, spanning more than one revolution 84, will indicate an uneven gear wheel. This can manifest as "heartbeats" in the paint flow when painting at higher flow rates.

A sudden change between two local minimums or two local maximums of the downstream pressure values 68 will indicate damage to a single point on the gear wheel, such as a tooth. If this is the case, the same "heartbeats" can be seen.

A result of these signatures in the downstream pressure values 68 may form the basis for comparison to determine an operational condition of the gear pump 42. If the gear pump 42 is outside a recommended area of operation, a warning and optionally associated information can be issued to the user, e.g. through a system error and a warning infrastructure of the robot system 10.

Should one of the driving gear wheel 44 and the driven gear wheel 46 be misaligned, the downstream pressure value 68 will drop on one half of a full revolution 84, while it will build higher for the other. If a tooth is broken, the pressure rise that is expected to occur will not occur.

When only one of the driving gear wheel 44 and the driven gear wheel 46 is inaccurately positioned with respect to the housing 52, the downstream pressure will be pulsing in correlation with the rotational speed of the gear pump 42.

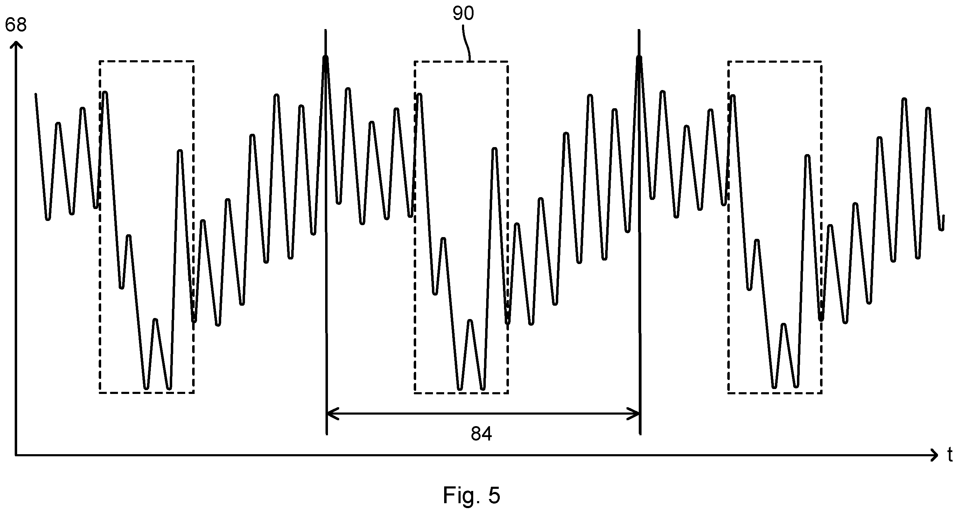

Fig. 5 schematically represents a diagram of the downstream pressure values 68 of the gear pump 42 as a function of time t when one of the driving gear wheel 44 and the driven gear wheel 46 is damaged. In addition to misalignment, the signature of the downstream pressure shows that a tooth of the gear pump 42 is damaged. Thus, a defect of one tooth is a further example of an operational condition of the gear pump 42 that can be determined by the method. In Fig. 5, the regions 90 show abnormal behavior of the gear pump 42. due to the damaged tooth.

The testing mode may be run as a quick diagnostic check of the gear pump 42. The rotation values 82 and the downstream pressure values 68 are recorded and processed by the control system 76 to determine one or more operational conditions of the gear pump 42. Information regarding the health status of the gear pump 42, as determined by the control system 76, is then communicated to the user. A warning may also be issued in good time before the gear pump 42 needs maintenance or repair.

In the next painting process, the control system 76 automatically compensates for the determined operational condition of the gear pump 42. For example, the rotational speed is increased based on the determined leakage of the gear pump 42 to achieve a desired flow rate of the paint.

In some prior art apparatuses, a gear flow meter is installed downstream of the gear pump 42 to monitor the actual flow rate in real time (monitoring the difference between the requested flow rate and the actual flow rate). By frequently running the method according to the present disclosure, such gear flow meter can be eliminated. This saves cost and reduces complexity in the coating apparatus 14.

Since the upstream pressure sensor 70, the downstream pressure sensor 64 and the downstream valve 62 are known as such, the method can be carried out with a prior art apparatus by merely changing the software in the control system 76.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A method of handling a gear pump (42), the gear pump (42) comprising a driving gear wheel (44) having a plurality of driving teeth (48) and a driven gear wheel (46) having a plurality of driven teeth (50) meshing with the driving teeth (48), the method comprising:
- controlling the gear pump (42) in a testing mode comprising commanding driving of the gear pump (42) to pump liquid towards a downstream device (62) and commanding an increase of rotational speed of the gear pump (42);
- monitoring rotation values (82) indicative of the rotational speeds during the testing mode;
- monitoring pressure values (68) by means of at least a downstream pressure sensor (64) during the testing mode, the downstream pressure sensor (64) being arranged to measure a downstream pressure of the liquid between the gear pump (42) and the downstream device (62); and
- determining at least one operational condition of the gear pump (42) based on the pressure values (68) and the rotation values (82).

2. The method according to claim 1, further comprising:
- monitoring pressure difference values indicative of pressure differences over the gear pump (42), the pressure difference values being determined based on the pressure values (68); and
- determining the at least one operational condition of the gear pump (42) based on the rotation value (82) when the pressure difference value reaches a target pressure difference value.

3. The method according to any of the preceding claims, wherein the at least one operational condition comprises a leakage of the gear pump (42), a misalignment between the driving gear wheel (44) and the driven gear wheel (46), and/or a defect of one of the driving teeth (48) and the driven teeth (50).

4. The method according to any of the preceding claims, further comprising controlling the gear pump (42) in an operational mode comprising commanding driving of the gear pump (42) to pump liquid through the downstream device (62) while controlling the gear pump (42) to automatically compensate for the at least one operational condition.

5. The method according to any of the preceding claims, further comprising automatically issuing a warning based on the at least one operational condition.

6. The method according to any of the preceding claims, wherein the downstream device (62) is a downstream valve, and wherein the downstream valve is closed during the testing mode.

7. A control system (76) for handling a gear pump (42), the gear pump (42) comprising a driving gear wheel (44) having a plurality of driving teeth (48) and a driven gear wheel (46) having a plurality of driven teeth (50) meshing with the driving teeth (48), the control system (76) comprising at least one data processing device (78) and at least one memory (80) having a computer program stored thereon, the computer program comprising program code which, when executed by the at least one data processing device (78), causes the at least one data processing device (78) to perform the steps of:
- controlling the gear pump (42) in a testing mode, the testing mode comprising commanding driving of the gear pump (42) to pump liquid towards a downstream device (62) and commanding an increase of rotational speed of the gear pump (42);
- providing rotation values (82) indicative of the rotational speeds during the testing mode;
- providing pressure values (68) monitored by means of at least a downstream pressure sensor (64) during the testing mode, the downstream pressure sensor (64) being arranged to measure a downstream pressure of the liquid between the gear pump (42) and the downstream device (62); and
- determining at least one operational condition of the gear pump (42) based on the pressure values (68) and the rotation values (82).

8. The control system (76) according to claim 7, wherein the computer program comprises program code which, when executed by the at least one data processing device (78), causes the at least one data processing device (78) to perform the steps of:
- providing pressure difference values indicative of pressure differences over the gear pump (42), the pressure difference values being determined based on the pressure values (68); and
- determining the at least one operational condition of the gear pump (42) based on the rotation value (82) when the pressure difference value reaches a target pressure difference value.

9. The control system (76) according to claim 7 or 8, wherein the at least one operational condition comprises a leakage of the gear pump (42), a misalignment between the driving gear wheel (44) and the driven gear wheel (46), and/or a defect of one of the driving teeth (48) and the driven teeth (50).

10. The control system (76) according to any of claims 7 to 9, wherein the computer program comprises program code which, when executed by the at least one data processing device (78), causes the at least one data processing device (78) to perform the step of:
- controlling the gear pump (42) in an operational mode, the operational mode comprising commanding driving of the gear pump (42) to pump liquid through the downstream device (62) while controlling the gear pump (42) to automatically compensate for the at least one operational condition.

11. The control system (76) according to any of claims 7 to 10, wherein the computer program comprises program code which, when executed by the at least one data processing device (78), causes the at least one data processing device (78) to perform the step of:
- automatically commanding issuance of a warning based on the at least one operational condition.

12. An apparatus (14) for applying a coating medium (16) to an object (18), the apparatus (14) comprising a gear pump (42), a downstream device (62), a downstream pressure sensor (64) and the control system (76) according to any of claims 7 to 11.

13. The apparatus (14) according to claim 12, wherein the downstream device (62) is a downstream valve, and wherein the computer program comprises program code which, when executed by the at least one data processing device (78), causes the at least one data processing device (78) to perform the step of:
- commanding closing of the downstream valve during the testing mode.

14. The apparatus (14) according to claim 13, further comprising a coating medium line (40) for supplying the coating medium (16), wherein the gear pump (42), the downstream device (62) and the downstream pressure sensor (64) are arranged on the coating medium line (40).

15. A robot system (10) comprising an industrial robot (12) and an apparatus (14) according to any of claims 12 to 14.

## Patentansprüche

1. Verfahren zum Handhaben einer Zahnradpumpe (42), wobei die Zahnradpumpe (42) ein Antriebszahnrad (44) mit mehreren Antriebszähnen (48) und ein angetriebenes Zahnrad (46) mit mehreren angetriebenen Zähnen (50) umfasst, die mit den Antriebszähnen (48) kämmen, wobei das Verfahren Folgendes umfasst:
- Steuern der Zahnradpumpe (42) in einem Testmodus, der das Anweisen des Antriebs der Zahnradpumpe (42) zum Pumpen von Flüssigkeit in Richtung einer nachgeschalteten Vorrichtung (62) und das Anweisen eines Anstiegs der Drehzahl der Zahnradpumpe (42) umfasst;
- Überwachen der Drehzahlwerte (82), die die Drehzahlen während des Testmodus angeben;
- Überwachen der Druckwerte (68) mittels mindestens eines nachgeschalteten Drucksensors (64) während des Testmodus, wobei der nachgeschaltete Drucksensor (64) dazu angeordnet ist, einen nachgeschalteten Druck der Flüssigkeit zwischen der Zahnradpumpe (42) und der nachgeschalteten Vorrichtung (62) zu messen; und
- Bestimmen mindestens eines Betriebszustands der Zahnradpumpe (42) basierend auf den Druckwerten (68) und den Drehzahlwerten (82).

2. Verfahren nach Anspruch 1, ferner umfassend:
- Überwachen von Druckdifferenzwerten, die Druckdifferenzen über der Zahnradpumpe (42) anzeigen, wobei die Druckdifferenzwerte basierend auf den Druckwerten (68) bestimmt werden; und
- Bestimmen des mindestens einen Betriebszustands der Zahnradpumpe (42) basierend auf dem Rotationswert (82), wenn der Druckdifferenzwert einen Solldruckdifferenzwert erreicht.

3. Verfahren nach einem der vorhergehenden Ansprüche, wobei der mindestens eine Betriebszustand eine Leckage der Zahnradpumpe (42), eine Fehlausrichtung zwischen dem Antriebszahnrad (44) und dem angetriebenen Zahnrad (46) und/oder einen Defekt eines der Antriebszähne (48) und der angetriebenen Zähne (50) umfasst.

4. Verfahren nach einem der vorhergehenden Ansprüche, das ferner das Steuern der Zahnradpumpe (42) in einem Betriebsmodus umfasst, der das Anweisen des Antreibens der Zahnradpumpe (42) zum Pumpen von Flüssigkeit durch die nachgeschaltete Vorrichtung (62) umfasst, während die Zahnradpumpe (42) gesteuert wird, den mindestens einen Betriebszustand automatisch zu kompensieren.

5. Verfahren nach einem der vorhergehenden Ansprüche, ferner umfassend automatisches Ausgeben einer Warnung basierend auf dem mindestens einen Betriebszustand.

6. Verfahren nach einem der vorhergehenden Ansprüche, wobei die nachgeschaltete Vorrichtung (62) ein nachgeschaltetes Ventil ist und wobei das nachgeschaltete Ventil während des Testmodus geschlossen ist.

7. Steuersystem (76) zum Handhaben einer Zahnradpumpe (42), wobei die Zahnradpumpe (42) ein Antriebszahnrad (44) mit mehreren Antriebszähnen (48) und ein angetriebenes Zahnrad (46) mit mehreren angetriebenen Zähnen (50), die mit den Antriebszähnen (48) kämmen, umfasst, wobei das Steuersystem (76) mindestens eine Datenverarbeitungsvorrichtung (78) und mindestens einen Speicher (80) mit einem darauf gespeicherten Computerprogramm umfasst, wobei das Computerprogramm einen Programmcode umfasst, der beim Ausführen durch die mindestens eine Datenverarbeitungsvorrichtung (78) bewirkt, dass die mindestens eine Datenverarbeitungsvorrichtung (78) die folgenden Schritte durchführt:
- Steuern der Zahnradpumpe (42) in einem Testmodus, wobei der Testmodus das Anweisen des Antreibens der Zahnradpumpe (42) zum Pumpen von Flüssigkeit zu einer nachgeschalteten Vorrichtung (62) und das Anweisen eines Anstiegs der Drehzahl der Zahnradpumpe (42) umfasst;
- Vorsehen von Drehzahlwerten (82), die die Drehzahlen während des Testmodus angeben;
- Vorsehen von Druckwerten (68), die mittels mindestens eines nachgeschalteten Drucksensors (64) während des Testmodus überwacht werden, wobei der nachgeschaltete Drucksensor (64) dazu angeordnet ist, einen nachgeschalteten Druck der Flüssigkeit zwischen der Zahnradpumpe (42) und der nachgeschalteten Vorrichtung (62) zu messen; und
- Bestimmen mindestens eines Betriebszustands der Zahnradpumpe (42) basierend auf den Druckwerten (68) und den Drehzahlwerten (82).

8. Steuersystem (76) nach Anspruch 7, wobei das Computerprogramm Programmcode umfasst, der beim Ausführen durch die mindestens eine Datenverarbeitungsvorrichtung (78) bewirkt, dass die mindestens eine Datenverarbeitungsvorrichtung (78) die folgenden Schritte durchführt:
- Vorsehen von Druckdifferenzwerten, die Druckdifferenzen über der Zahnradpumpe (42) angeben, wobei die Druckdifferenzwerte basierend auf den Druckwerten (68) bestimmt werden; und
- Bestimmen des mindestens einen Betriebszustands der Zahnradpumpe (42) basierend auf dem Rotationswert (82), wenn der Druckdifferenzwert einen Solldruckdifferenzwert erreicht.

9. Steuersystem (76) nach Anspruch 7 oder 8, wobei der mindestens eine Betriebszustand eine Leckage der Zahnradpumpe (42), eine Fehlausrichtung zwischen dem Antriebszahnrad (44) und dem angetriebenen Zahnrad (46) und/oder einen Defekt eines der Antriebszähne (48) und der angetriebenen Zähne (50) umfasst.

10. Steuersystem (76) nach einem der Ansprüche 7 bis 9, wobei das Computerprogramm Programmcode umfasst, der beim Ausführen durch die mindestens eine Datenverarbeitungsvorrichtung (78) bewirkt, dass die mindestens eine Datenverarbeitungsvorrichtung (78) den folgenden Schritt durchführt:
- Steuern der Zahnradpumpe (42) in einem Betriebsmodus, wobei der Betriebsmodus das Anweisen des Antreibens der Zahnradpumpe (42) zum Pumpen von Flüssigkeit durch die nachgeschaltete Vorrichtung (62) umfasst, während die Zahnradpumpe (42) gesteuert wird, den mindestens einen Betriebszustand automatisch zu kompensieren.

11. Steuersystem (76) nach einem der Ansprüche 7 bis 10, wobei das Computerprogramm Programmcode umfasst, der beim Ausführen durch die mindestens eine Datenverarbeitungsvorrichtung (78) bewirkt, dass die mindestens eine Datenverarbeitungsvorrichtung (78) den folgenden Schritt durchführt:
- automatisches Anweisen der Ausgabe einer Warnung basierend auf dem mindestens einen Betriebszustand.

12. Vorrichtung (14) zum Aufbringen eines Beschichtungsmediums (16) auf ein Objekt (18), wobei die Vorrichtung (14) eine Zahnradpumpe (42), eine nachgeschaltete Vorrichtung (62), einen nachgeschalteten Drucksensor (64) und das Steuersystem (76) nach einem der Ansprüche 7 bis 11 umfasst.

13. Vorrichtung (14) nach Anspruch 12, wobei die nachgeschaltete Vorrichtung (62) ein nachgeschaltetes Ventil ist und wobei das Computerprogramm Programmcode umfasst, der beim Ausführen durch die mindestens eine Datenverarbeitungsvorrichtung (78) bewirkt, dass die mindestens eine Datenverarbeitungsvorrichtung (78) den folgenden Schritt durchführt:
- Anweisen des Schließens des nachgeschalteten Ventils während des Testmodus.

14. Vorrichtung (14) nach Anspruch 13, die ferner eine Beschichtungsmediumlinie (40) zum Zuführen des Beschichtungsmediums (16) umfasst, wobei die Zahnradpumpe (42), die nachgeschaltete Vorrichtung (62) und der nachgeschaltete Drucksensor (64) auf der Beschichtungsmediumlinie (40) angeordnet sind.

15. Robotersystem (10), das einen Schweißroboter (12) und eine Vorrichtung (14) nach einem der Ansprüche 12 bis 14 umfasst.

## Revendications

1. Procédé de manipulation d'une pompe à engrenages (42), la pompe à engrenages (42) comprenant une roue d'engrenage menante (44) ayant une pluralité de dents menantes (48) et une roue d'engrenage menée (46) ayant une pluralité de dents menées (50) s'engrenant avec les dents menantes (48), le procédé comprenant les faits :
- de commander la pompe à engrenages (42) dans un mode d'essai comprenant les faits de donner l'ordre d'entraîner la pompe à engrenages (42) pour pomper un liquide vers un dispositif en aval (62) et de donner l'ordre d'augmenter une vitesse de rotation de la pompe à engrenages (42) ;
- de surveiller des valeurs de rotation (82) indicatives des vitesses de rotation durant le mode d'essai ;
- de surveiller des valeurs de pression (68) au moyen d'au moins un capteur de pression en aval (64) durant le mode d'essai, le capteur de pression en aval (64) étant agencé pour mesurer une pression en aval du liquide entre la pompe à engrenages (42) et le dispositif en aval (62) ; et
- de déterminer au moins une condition de fonctionnement de la pompe à engrenages (42) sur la base des valeurs de pression (68) et des valeurs de rotation (82).

2. Procédé selon la revendication 1, comprenant en outre les faits :
- de surveiller des valeurs de différence de pression indicatives de différences de pression sur la pompe à engrenages (42), les valeurs de différence de pression étant déterminées sur la base des valeurs de pression (68) ; et
- de déterminer l'au moins une condition de fonctionnement de la pompe à engrenages (42) sur la base de la valeur de rotation (82) lorsque la valeur de différence de pression atteint une valeur de différence de pression cible.

3. Procédé selon de quelconques des revendications précédentes, dans lequel l'au moins une condition de fonctionnement comprend une fuite de la pompe à engrenages (42), un désalignement entre la roue d'engrenage menante (44) et la roue d'engrenage menée (46), et/ou un défaut d'une des dents menantes (48) et des dents menées (50).

4. Procédé selon de quelconques des revendications précédentes, comprenant en outre le fait de commander la pompe à engrenages (42) dans un mode de fonctionnement comprenant le fait de donner l'ordre d'entraîner la pompe à engrenages (42) pour pomper un liquide à travers le dispositif en aval (62) tout en commandant la pompe à engrenages (42) pour compenser automatiquement l'au moins une condition de fonctionnement.

5. Procédé selon de quelconques des revendications précédentes, comprenant en outre le fait d'émettre automatiquement un avertissement sur la base de l'au moins une condition de fonctionnement.

6. Procédé selon de quelconques des revendications précédentes, dans lequel le dispositif en aval (62) est une vanne en aval, et dans lequel la vanne en aval est fermée durant le mode d'essai.

7. Système de commande (76) pour manipuler une pompe à engrenages (42), la pompe à engrenages (42) comprenant une roue d'engrenage menante (44) ayant une pluralité de dents menantes (48) et une roue d'engrenage menée (46) ayant une pluralité de dents menées (50) s'engrenant avec les dents menantes (48), le système de commande (76) comprenant au moins un dispositif de traitement de données (78) et au moins une mémoire (80) ayant un programme d'ordinateur stocké sur celle-ci, le programme d'ordinateur comprenant un code de programme qui, lorsqu'il est exécuté par l'au moins un dispositif de traitement de données (78), amène l'au moins un dispositif de traitement de données (78) à réaliser les étapes consistant :
- à commander la pompe à engrenages (42) dans un mode d'essai, le mode d'essai comprenant les faits de donner l'ordre d'entraîner la pompe à engrenages (42) pour pomper un liquide vers un dispositif en aval (62) et de donner l'ordre d'augmenter une vitesse de rotation de la pompe à engrenages (42) ;
- à fournir des valeurs de rotation (82) indicatives des vitesses de rotation durant le mode d'essai ;
- à fournir des valeurs de pression (68) surveillées au moyen d'au moins un capteur de pression en aval (64) durant le mode d'essai, le capteur de pression en aval (64) étant agencé pour mesurer une pression en aval du liquide entre la pompe à engrenages (42) et le dispositif en aval (62) ; et
- de déterminer au moins une condition de fonctionnement de la pompe à engrenages (42) sur la base des valeurs de pression (68) et des valeurs de rotation (82).

8. Système de commande (76) selon la revendication 7, dans lequel le programme d'ordinateur comprend un code de programme qui, lorsqu'il est exécuté par l'au moins un dispositif de traitement de données (78), amène l'au moins un dispositif de traitement de données (78) à réaliser les étapes consistant :
- à fournir des valeurs de différence de pression indicative de différences de pression sur la pompe à engrenages (42), les valeurs de différence de pression étant déterminées sur la base des valeurs de pression (68) ; et
- de déterminer l'au moins une condition de fonctionnement de la pompe à engrenages (42) sur la base de la valeur de rotation (82) lorsque la valeur de différence de pression atteint une valeur de différence de pression cible.

9. Système de commande (76) selon la revendication 7 ou 8, dans lequel l'au moins une condition de fonctionnement comprend une fuite de la pompe à engrenages (42), un désalignement entre la roue d'engrenage menante (44) et la roue d'engrenage menée (46), et/ou un défaut d'une des dents menantes (48) et des dents menées (50).

10. Système de commande (76) selon de quelconques des revendications 7 à 9, dans lequel le programme d'ordinateur comprend un code de programme qui, lorsqu'il est exécuté par l'au moins un dispositif de traitement de données (78), amène l'au moins un dispositif de traitement de données (78) à réaliser l'étape consistant :
- à commander la pompe à engrenages (42) dans un mode de fonctionnement, le mode de fonctionnement comprenant le fait de donner l'ordre d'entraîner la pompe à engrenages (42) pour pomper un liquide à travers le dispositif en aval (62) tout en commandant la pompe à engrenages (42) pour compenser automatiquement l'au moins une condition de fonctionnement.

11. Système de commande (76) selon de quelconques des revendications 7 à 10, dans lequel le programme d'ordinateur comprend un code de programme qui, lorsqu'il est exécuté par l'au moins un dispositif de traitement de données (78), amène l'au moins un dispositif de traitement de données (78) à réaliser l'étape consistant :
- à donner automatiquement l'ordre d'émettre un avertissement sur la base de l'au moins une condition de fonctionnement.

12. Appareil (14) pour appliquer un matériau de revêtement (16) sur un objet (18), l'appareil (14) comprenant une pompe à engrenages (42), un dispositif en aval (62), un capteur de pression en aval (64), et le système de commande (76) selon de quelconques des revendications 7 à 11.

13. Appareil (14) selon la revendication 12, dans lequel le dispositif en aval (62) est une vanne en aval, et dans lequel le programme d'ordinateur comprend un code de programme qui, lorsqu'il est exécuté par l'au moins un dispositif de traitement de données (78), amène l'au moins un dispositif de traitement de données (78) à réaliser l'étape consistant :
- à donner l'ordre de fermer la vanne en aval durant le mode d'essai.

14. Appareil (14) selon la revendication 13, comprenant en outre une conduite de matériau de revêtement (40) pour effectuer l'alimentation en le matériau de revêtement (16), dans lequel la pompe à engrenages (42), le dispositif en aval (62), et le capteur de pression en aval (64) sont agencés sur la conduite de matériau de revêtement (40).

15. Système robot (10), comprenant un robot industriel (12) et un appareil (14) selon de quelconques des revendications 12 à 14.
